# EUROPÄISCHE PATENTSCHRIFT

(11) **EP 0 633 065 B1**
(45) Veröffentlichungstag und Bekanntmachung des Hinweises auf die Patenterteilung: **14.01.1998**
(21) Anmeldenummer: 94250164.4
(22) Anmeldetag: 23.06.1994
(51) Int. Cl.: B01J 35/06, B01J 37/02, B01J 35/00, F01N 3/28, F01N 3/20

(54) **Vorrichtung zur Reinigung schadstoffbeladener Abluft durch heterogene Katalyse**
Process for the cleaning of exhaust air containing noxious substances by heterogeneous catalysis
Procédé de purification d'air d'échappement contenant des substances nocives par catalyse hétérogène

(30) Priorität: 28.06.1993 DE 4321831; 22.06.1994 DE 4423329
(43) Veröffentlichungstag der Anmeldung: 11.01.1995
(73) Patentinhaber: MANNESMANN Aktiengesellschaft, 40213 Düsseldorf (DE)
(72) Erfinder: Becker, Oliver, D-66679 Losheim (DE); Kolz, Sabine, D-66352 Grossrosseln (DE); Hager, Herbert, Dipl.-Ing., D-66809 Nalbach (DE)
(74) Vertreter: Meissner, Peter E., Dipl.-Ing.

(56) Entgegenhaltungen:
- EP-A- 0 275 681
- EP-A- 0 485 179
- EP-A- 0 525 761
- DE-A- 4 209 195
- FR-A- 1 443 846
- FR-A- 2 257 340
- US-A- 4 195 063

## Beschreibung

Die Erfindung betrifft eine Vorrichtung zur Reinigung schadstoffbeladener Abluft durch heterogene Katalyse gemäß dem Gattungsbegriff des Hauptanspruches.

Eine Vorrichtung zur Durchführung katalytischer Reaktionen ist aus der DE-AS 1003192 bekannt. Als Trägermaterial wird ein Draht, vorzugsweise aus einer Chrom-Nickel-Legierung verwendet, der mit einem dünnen, fest haftenden Überzug aus einem temperaturbeständigen hochporösen Oxid beispielsweise Aluminiumoxid oder mit einer Mischung verschiedener Oxide beschichtet wird. Anschließend wird die Beschichtung mit einem katalytisch aktiven Material, beispielsweise Platin, imprägniert. Die beschichteten Drähte werden nach dem Behandlungsverfahren zu Flachspulen gewickelt und in einem Spulenhalter montiert. Bei der erwähnten Anordnung mehrerer miteinander verbundener Spulen werden die einzelnen Flachspulen durch eine dazwischenliegende Glimmerschicht elektrisch und kontaktmäßig voneinander getrennt. Die vorgeschlagene Vorrichtung hat den Nachteil, daß die Spulenanordnung bei einem entsprechenden Durchtrittsquerschnitt instabil ist. Die Flachspulen müssen deshalb sehr sorgfältig am äußeren Rand im Spulenhalter gehalten werden, damit bei Erwärmung der Spule es nicht zu einem Durchhang kommt. Die für die heterogene Katalyse zur Verfügung stehende Gesamtfläche der jeweiligen Flachspule ist begrenzt, da der äußere Rand durch den Spulenhalter abgedeckt ist, außerdem bildet der Glimmerstreifen zwischen den beiden Flachspulen eine Sperrschicht, so daß in Strömungsrichtung gesehen die über der Glimmerschicht liegende Flachspule nur mit einer Teilfläche an der Katalyse beteiligt ist. Größere Querschnitte können in der vorgeschlagenen Art nicht hergestellt werden, da ohne eine entsprechende Abstützung die Flachspule durch ihr Eigengewicht durchhängen würde. Für die Herstellung und Handhabung der Flachspulen sind Fachkräfte erforderlich, da die Drähte sehr dünn sind und ein Durchmesser unter 1 mm aufweisen. Von Nachteil ist auch, daß der Widerstandsdraht vor dem Wickeln mit der Oxidschicht überzogen ist, so daß immer die Gefahr besteht, daß partiell der spröde Filmüberzug abblättert und es dann zu Kurzschlußkontakten im Windungsbereich kommt.

Aus der DE-37 16 446 A1 ist ein katalytischer Dieselruß-Filter bekannt, bei dem auf ein festes Filterelement, vorzugsweise ein Wabenkörper mit wechselseitig verschlossenen Kanälen, eine Beschichtung aus metalldotierten Zeolith aufgebracht wird. Vorzugsweise ist das dotierte Metall Platin. Die vorgeschlagene Beschichtung des Filterelementes wird dazu verwendet, um den Zündzeitpunkt für das thermische Verbrennen der angelagerten Rußteilchen zu erniedrigen. Um die dafür erforderliche Edelmetallmenge gering zu halten, wird mittels eines zeolithischen Grundkörpers das Edelmetall fein verteilt. Die Wirksamkeit des Verfahrens muß angezweifelt werden, da ein Rußpartikel in seinen Abmessungen um Zehnerpotenzen großer ist, als die Porengroße des verwendeten Zeolith. Das bedeutet, daß ein Großteil des aufgebrachten Edelmetalls katalytisch nicht wirksam werden kann, da das einzelne Rußpartikel in die kleine Pore nicht hineinpaßt und es zu keinem Kontakt mit zu den dort datierten Edelmetallteilchen kommt. Außerdem ist ein Großteil des Platins räumlich im Zeolith fixiert und kann nicht mit den Rußpartikeln in Kontakt treten.

Eine gattungsbildende Vorrichtung zur Reinigung schadstoffbeladener Abluft ist aus der DE-43 39 025 A1 bekannt. Diese Vorrichtung besteht aus einem nichtmetallischen gasdurchlässigen und wickelbaren Trägerelement, das einzelne mit einer adsorptiv wirkenden Schicht eines Stoffes überzogene keramische Fasern aufweist. Das Trägermaterial ist sandwichartig mit einem beheizbaren metallischen Gewebeband verbunden, das mit Katalysatormaterial überzogen ist. Das Gesamtelement ist in einem Gehäuse angeordnet, das mit eins Einlaß und einem Auslaß versehen ist, durch die das mit Schadstoffen befrachtete Gas zuführbar und das gereinigte Gas abführbar sind. Nachteilig bei dieser Anordnung ist die zu geringe spezifische Oberfläche des Trägerelementes und die ungünstige Plazierung des Katalysatormaterials.

In der US-PS 5,180,409 ist ein Dieselrußfilter offenbart, das aus einem ein- oder mehrlagigen Gewebe aus vorzugsweise Keramikgarn besteht. Für niedrigere Temperaturen zwischen 330 bis 550°C kann auch ein Glasgarn verwendet werden. Zur Verstärkung des Gewebes wird ein flexibles Füllgarn mit eingewebt. Das Gewebe ist nicht beschichtet und wegen der großen Lücken zwischen den einzelnen Garnelementen als Adsorptiv nicht geeignet. Weiterhin ist das Filter nicht regenerierbar und muß nach Erreichen eines vorgegebenen maximalen Druckverlustes ausgewechselt werden.

Aufgabe der Erfindung ist es, eine einfach herzustellende, kompakte Vorrichtung zur Reinigung schadstoffbeladener Abluft durch heterogene Katalyse mit vorheriger Adsorption und Desorption anzugeben, mit der regenerierbar und ohne Ausbau des Filterelementes auch bei schwankenden Schadstoffkonzentrationen von weniger als 100 mg/cbm das mit unterschiedlichen Beimengungen befrachtete Gas mit verbessertem Wirkungsgrad und geringerem Energiebedarf im Vergleich zur bekannten Anlage gereinigt werden kann.

Diese Aufgabe wird mit den im kennzeichnenden Teil des Anspruches 1 angegebenen Merkmalen gelöst. Vorteilhafte Weiterbildungen sind Bestandteil von Unteransprüchen.

Im Unterschied zum bekannten Stand der Technik ist das Trägermaterial für die Beschichtungssubstanzen ein aus Glasgarn gestricktes Band, wobei das Garn ein Filamentgarn einzelner Glasfasern ist, das mit einer Appretur im Sinne der Erhöhung der Temperaturbeständigkeit überzogen ist. Dies hat den Vorteil, daß das gestrickte Band gegenüber dem schon bekannten Gewebe eine größere wirkende Oberfläche und eine höhere Gasdurchlässigkeit im Sinne einer starken Umlenkung des Gasstromes aufweist. Wird das Band darüber hinaus noch gewickelt, dann werden Oberflächen erreicht, die erheblich größer sind als mehrfach übereinander gelegte Gewebeteile. Außerdem kann man beispielsweise unter Verwendung einer Haspel und eines Gehäusemantels praktisch beliebig große Durchmesser wickeln, ohne daß die Vorrichtung instabil wird. Im Unterschied zur Aktivkohle ist das vorgeschlagene gestrickte Band nicht brennbar und auch bei hohen Temperaturen bis zu 700 Grad Celsius In seiner Struktur beständig.

Erfindungsgemäß wird das als Trägermaterial fungierende gestrickte Band zusammen mit dem die gleiche Breite aufweisenden metallischen Gewebeband hochkantstehend spiralförmig zu einer ein Mittenloch aufweisenden Scheibe gewickelt. Diese Scheibe wird mit einem an sich bekannten zeolithischen Molekularsieb beschichtet, wobei aber im Unterschied zum bekannten Stand der Technik das zeolithische Molekularsieb pulverförmig ist. In dieser Form weist es im Vergleich zu einem bekannten Adsorber-Bett eine erheblich größere Oberfläche auf. In die adsorptiv wirkende Schicht ist mittels des an sich bekannten Sol-Gel-Verfahrens Katalysatormaterial vorzugsweise Platin implantiert.

Die Verwendung eines an sich bekannten zeolithischen Molekularsiebes als Adsorptionsmittel, das erfindungsgemäß in Pulverform fein verteilt auf dem Trägerelement aufgebracht wird, hat mehrere Vorteile gegenüber anderen bekannten adsorptiv wirkenden Materialien. Zum einen ist die Adsorption auch noch bei hohen Temperaturen, d.h. bis etwa 200°C wirksam. Der Wirkungsgrad nimmt aber mit steigenden Temperaturen ab, da die Schwingungsamplitude der angelagerten Schadstoffmoleküle zunimmt und ab einer bestimmten Temperatur die Bindungskräfte nicht mehr ausreichen und es zur Desorption kommt. Ein weiterer Vorteil des zeolithischen Molekularsiebes ist darin zu sehen, daß auch geringste Konzentrationen der Schadstoffe in der zu reinigenden Abluft erfaßt werden im Unterschied zur Aktivkohle. Bei der Aktivkohle steigt die Adsorptionsfähigkeit erst bei höheren Konzentrationen zu ausnutzbaren Werten an. Da das zeolithische Molekularsieb ein synthetisch hergestellter Stoff ist, kann er mit genau definierten Eigenschaften u.a auch der Porengröße hergestellt werden, während die Aktivkohle eine Verteilung der Porengröße über mehrere Zehnerpotenzen hinweg aufweist. Außerdem gibt es unterschiedliche Typen von Molekularsieben im Hinblick auf wasserabstoßend (hydrophob) und wasseranziehend (hydrophil), die für die adsorptive Anlagerung unterschiedlicher Schadstoffe in den Abluftgemischen gezielt ausgenutzt werden können. Das Gesamtelement kann wahlweise mit verschiedenen Zeolithtypen beschichtet werden oder mit einem Gemisch, wobei die Anteile unterschiedlich sein können. Das hat den Vorteil, daß das Filter genau auf den jeweiligen Schadstofftyp abgestimmt werden kann. Außerdem ist es möglich, Filter mit unterschiedlichem Zeolithtyp parallel oder in Reihe zu schalten, um so auch ein sehr komplexes Gemisch verschiedener Schadstoffe im Sinne der Beseitigung dieser Schadstoffe beherrschen zu können.

Die Entfernung der angelagerten Schadstoffe erfolgt über ein katalytisches Verbrennen, wofür das Gesamtelement nach der adsorptiven Beschichtung mit einem katalytisch wirkenden Material appliziert wird. Die katalytische Beschichtung erfolgt über das bekannte Sol-Gel-Verfahren. Je nach Herstellungsbedingungen erhält man Gele mit unterschiedlichen Eigenschaften. Die homogene Verteilung der Ausgangskomponenten (z.B. Pt-Partikel) bleibt beim Vergelungsprozeß erhalten. Nach dem Trocknen bildet sich ein SiO₂-Netz, in dem die Pt-Partikel feinstverteilt angeordnet sind.

Durch diese Art der Aufbringung des katalytischen Materials wird die adsorptive Wirkung des Gesamtelementes gesteigert und der Ort der adsorptiven Anlagerung und der katalytischen Verbrennung liegen unmittelbar nebeneinander.

Die Beheizung des beschichteten Gesamtelementes erfolgt in bekannter Weise über ein mit einer Spannungsquelle verbundenes, verformbares Heizelement, das mit dem Trägerelement eine Einheit bildet. Vorzugsweise ist dieses Heizelement ein metallisches Gewebeband aus einem hochtemperaturbeständigen Werkstoff, beispielsweise einer Chrom-Nickel-Legierung. Die Maschenweite dieses metallischen Gewebebandes ist kleiner als 1 mm und der Durchmesser des einzelnen Drahtes liegt unter 0,3 mm. Da dieses metallische Gewebeband flexibel ist, kann man es zusammen mit dem Band sandwichartig zu einem rohrförmigen Modul spiralförmig wickeln oder zu einem kastenartigen Modul falten. Um die erforderliche Prozeßtemperatur für die katalytische Verbrennung einstellen zu können, kann man am Heizelement einen Temperaturfühler anordnen. Vorzugsweise ist dies ein Thermoelement, das über Laserschweißen am metallischen Geweheband befestigt wird. Vorteilhafter wird die Beheizung durch Messen der Veränderung des elektrischen Widerstandes des Elementes gesteuert. Das einzelne als Katalysator ausgebildete Modul kann durch Reihen- oder Parallelschaltung zu größeren Einheiten zusammengefaßt werden. Dazu werden mindestens zwei vorzugsweise bis zu sechs Scheiben durch jeweils eine Glimmerscheibe getrennt aufeinanderliegend in einem zylindrischen Gehäuse angeordnet. Die Glimmerscheibe sorgt dafür, daß es zwischen den einzelnen Scheiben nicht zu elektrischen Kurzschlüssen kommt. Das Gehäuse weist einen perforierten Innen- und Außenmantel auf, so daß die zu reinigende Abluft ungehindert an das Modul herangeführt und die gereinigte Luft wieder abgeführt werden kann. Die Führung des Gases erfolgt dabei im wesentlichen radial von innen nach außen, d.h. quer zur Modulachse. Die Stirnseiten sind mit einem die beiden außenliegenden Scheiben verschließenden und den Innen- und Außenmantel umgreifenden Deckel versehen.

Der elektrische Anschluß eines solchen Moduls erfolgt in der Weise, daß immer zwei Scheiben elektrisch in Reihe geschaltet sind.

Neben der Geruchsneutralisation bei Großküchen, Intensivtierhaltung, der Lebens- und Genußmittelherstellung sowie der pharmazeutischen Industrie können mit dieser Technik die wesentlichen bekannten brennbaren und organischen Substanzen entfernt werden. Bei diesem breiten Anwendungsspektrum muß damit gerechnet werden, daß die zu reinigende Abluft zusätzlich mit festen Staubpartikeln belastet ist. Außerdem können Bestandteile in der Abluft enthalten sein, die bei der katalytischen Verbrennung Aschepartikel bilden. Solche Bestandteile müssen zuvor entfernt werden, damit das Element nicht schon nach kurzer Betriebszeit verschmutzt bzw. zuwächst. Für diese Falle wird deshalb vorgeschlagen, daß dem Element ein entsprechender Abscheider vorgeschaltet wird. Abscheider für Staubpartikel und für Bestandteile, die zu Aschepartikeln führen, sind hinlänglich bekannt, so daß sich eine weitergehende Erläuterung dafür erübrigt. In diesem Zusammenhang muß darauf hingewiesen werden, daß in der Abluft, insbesondere der von Großküchen, der Anteil an Wasserdampf sehr hoch sein kann. Da die Sättigungsgrenze der Abluft für Wasserdampf stark temperaturabhängig ist, muß darauf geachtet werden, daß auf dem Weg von der Absaugstelle bis zum abscheidenden Element der Taupunkt möglichst nicht unterschritten wird. Anderenfalls bilden die auskondensierten Wassertropfen auf dem Adsorptiv quasi eine Sperrschicht, so daß eine Anlagerung für die Schadstoffe zumindestens erschwert, wenn nicht unmöglich ist.

Der Vorteil der erfindungsgemäßen Vorrichtung ist darin zu sehen, daß die Vorrichtung als ein kompaktes, eine sehr große Oberfläche aufweisendes stabiles Adsorptiv ausgebildet ist, bei dem die Anlagerungsstelle für das abzuscheidende gasförmige Schadstoffmolekül und der Ort der katalytischen Verbrennung gleich sind. Außerdem ist diese Vorrichtung beliebig oft regenerierbar, da die Regenerierphase in einem Temperaturbereich abläuft, der nicht zu einer Umwandlung bzw. Beeinträchtigung des Adsorptivs führt. Ein weiterer Vorteil der vorgeschlagenen Vorrichtung ist die Temperaturbeständigkeit des Materials im Vergleich zur bekannten Aktivkohle. Die besonderen Maßnahmen, die bei der Desorption der an die Aktivkohle angelagerten Schadstoffe notwendig sind, können bei der vorgeschlagenen Vorrichtung entfallen. Die Vorrichtung ist auf jede Art von Schadstoffzusammensetzung leicht anpaßbar, da beim verwendeten zeolithischen Molekularsieb die notwendige Porengröße bzw. die Bandbreite der gewünschten Porengröße genau eingestellt werden können. Außerdem kann der passende Zeolithtyp im Hinblick auf die wasserabstoßende oder wasserabweisende Eigenschaft hin ausgewählt werden. Die Kombination eines gestrickten Bandes als Trägerelement mit der Beschichtung eines Zeolithen und einem über ein Sol-Gel-Verfahren abgeschiedenen katalytischen Material erlaubt eine Bandbreite der Anwendung, die von der Geruchsneutralisation übelriechender Gasgemische bis zur Reinigung schwerbelasteter Abluft reicht. Je nach Anforderung kann die Vorrichtung auf der einen Seite miniaturisiert werden, um einen problemlosen Einbau in bestehende Abluftleitungen zu ermöglichen als auch Abmessungen annehmen, die einen großtechnischen Einsatz, beispielsweise Klaranlagen, ermöglicht. Da das Modul eine abgeschlossene Einheit bildet, kann es zur Überprüfung und Nachkontrolle jederzeit ein-und ausgebaut werden, ohne die gesamte Anlage zerlegen zu müssen. Außer den elektrischen Anschlüssen für die Beheizung und die Temperaturmessung und möglicherweise einiger Justier- bzw. Halteschrauben sind keine weitere Montage- bzw. Demontageschritte erforderlich.

In der Zeichnung wird anhand eines Ausführungsbeispieles die erfindungsgemäße Vorrichtung naher erläutert.

Es zeigen:
- Figur 1: einen Querschnitt eines erfindungsgemäßen Rohrmoduls
- Figur 2: einen halbseitigen Längsschnitt und eine halbseitige Ansicht eines Moduls mit mehreren Scheiben
- Figur 3: eine Prinzipskizze einer Gesamteinrichtung einer Reinigungsanlage.

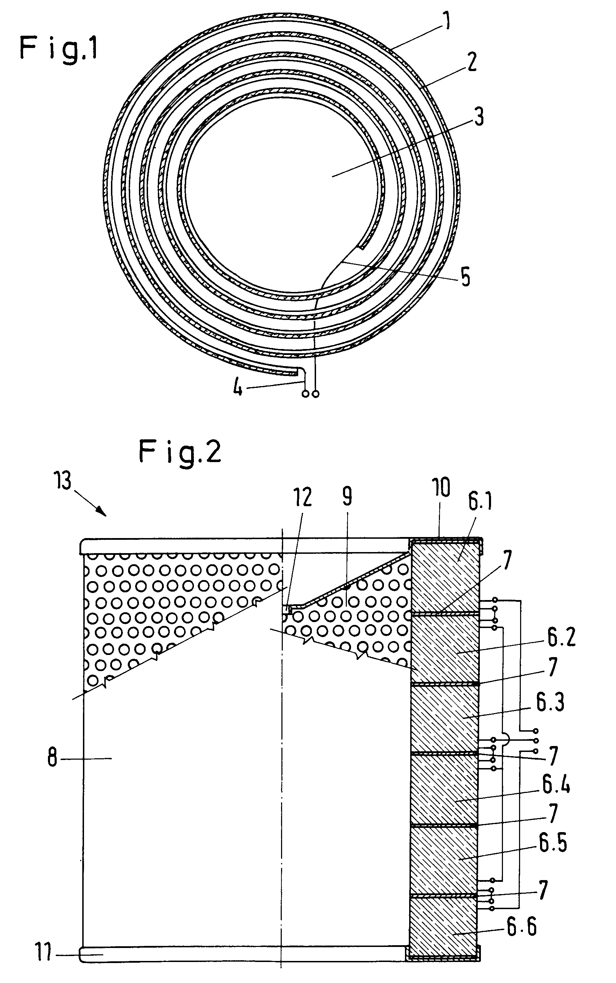

In Figur 1 ist in einem Querschnitt schematisch die bevorzugte Ausführungsform einer erfindungsgemäßen Vorrichtung dargestellt. In diesem Beispiel ist das sandwichartig aufeinanderliegende Tragerelement 1, d. h. ein aus Glasfasern bestehendes Destrick und das als Heizelement fungierende metallische Gewebeband 2 spiralförmig zu einem Rohrmodul gewickelt. Es ist leicht einsehbar, daß eine solche Wicklung nur möglich ist, wenn beide Elemente, d. h. das Trägerelement 1, wie auch das Heizelement 2 flexibel sind. Mit einer Vielzahl in der Literatur erwähnten Trägerelementen, beispielsweise Wabenkörper, Mineralwolle, keramischer Schaum und ähnliches ist dies nicht möglich. Aus Gründen der besseren Erkennbarkeit wurden die einzelnen Wickellagen im Abstand voneinander dargestellt. In Wirklichkeit liegen die Lagen ohne Zwischenraum aufeinander, um eine kompakte Scheibe zu fertigen. In der Mitte wird aus Gründen der Gaszuführung ein Bereich 3 freigelassen. An den Enden des Heizelementes 2 wird je eine Lasche 4, 5 angeschweißt, um daran die Spannungsquelle anschließen zu können. Das Gesamtelement ist mit einem zeolithischen Molekularsieb eines bestimmten Typs, d.h. hydrophob oder hydrophil oder aus einem Gemisch beider Typen beschichtet. Diese Adsorptionsschicht ist wiederum mit einem aktiv wirkenden katalytischen Material, vorzugsweise Platin über ein Sol-Gel-Verfahren imprägniert.

Figur 2 zeigt in einem halbseitigen Längsschnitt und in einer halbseitigen Ansicht ein Modul 13 mit mehreren Scheiben. In diesem Beispiel sind insgesamt sechs Scheiben 6.1-6.6 des Typs, wie in Fig. 1 dargestellt, in einem Gehäuse angeordnet. Die einzelnen aufeinanderliegenden Scheiben 6.1-6.6 sind durch Glimmerscheiben 7 voneinander getrennt. Dadurch soll ein elektrischer Kurzschluß zwischen den Heizelementen 2 zweier aufeinanderliegender Scheiben z.B. 6.1, 6.2 verhindert werden. Die Außenseite und die Innenseite der Scheiben 6.1-6.6 wird durch je einen perforierten Blechmantel 8, 9 umfaßt bzw. abgedeckt. Den stirnseitigen Anschluß bildet je ein Deckel 10, 11, der zum einen die jeweils außenliegenden Scheiben 6.1, 6.6 umfaßt und ebenso den Außen- 8 und den Innenmantel 9 umgreift. Je zwei Scheiben (6.1+6.2; 6.3+6.4; 6.5+6.6) sind in Reihe geschaltet. Diese werden mit je einer Phase des 400 V Drehstromnetzes verbunden und im Stern geschaltet. Das Loch 12 im oberen Deckel 10 dient zur Befestigung des Moduls 13, wobei eine Stange (hier nicht dargestellt) durch das Loch 12 gesteckt wird, deren Gewindeende mit einer Bodenplatte oder sonstigen Halterungen verbindbar ist.

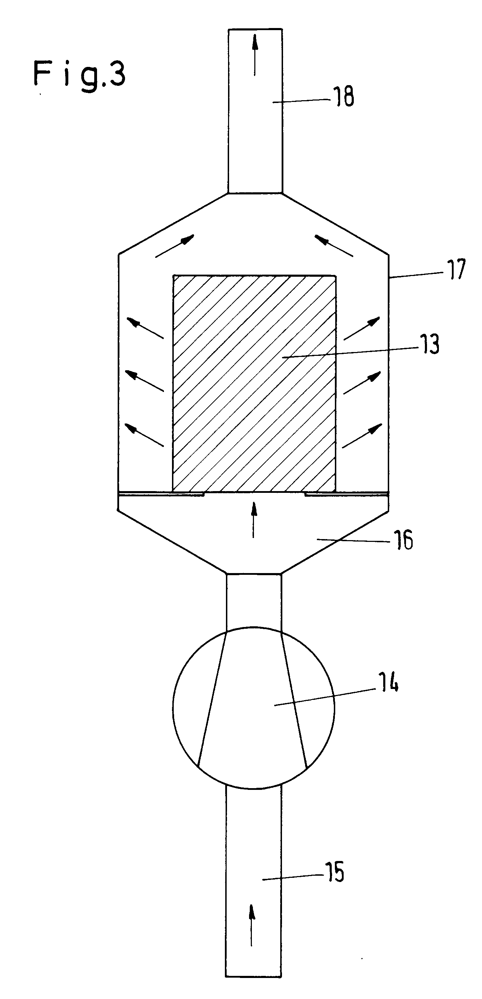

Figur 3 zeigt in einer Prinzipskizze die Gesamteinrichtung einer Reinigungsanlage mit der Anordnung des zuvor in Fig. 2 beschriebenen Moduls 13. Mittels eines Ventilators 14 oder eines Gebläses wird über eine Zuführleitung 15 die zu reinigende Abluft herangeführt. Die Abluft strömt in eine trichterförmig ausgebildete Kammer 16, die passend zur Öffnung 3 (Fig. 1) des Moduls 13 nach oben hin verschlossen ist. Dadurch wird die Abluft gezwungen, in den Innenraum des Moduls 13 zu strömen. In Fig. 2 ist dargestellt, daß das Modul 13 nach oben hin durch den Deckel 10 verschlossen ist. Die in das Modul 13 eingeströmte Abluft muß deshalb zwangsweise in etwa radial durch die einzelnen Scheiben 6.1-6.6 (Fig. 2) des Moduls hindurchtreten. Dabei erfolgt die adsorptive Anlagerung der Schadstoffe. Die aus dem Modul 13 heraustretende gereinigte Luft (siehe die dick ausgezogenen Pfeile) wird durch einen das Modul 13 umfassenden Gehäusemantel 17 gesammelt und über eine Abfuhrleitung 18 wegtransportiert. Durch einfaches Wegklappen des Gehäusemantels 17 kann das Modul 13 abgeschraubt und der Reinigungsanlage zwecks Inspektion oder Austausch in einfacher Weise entnommen werden.

Diese in Figur 3 dargestellte und erläuterte Reinigungsanlage stellt nur eine der möglichen Anwendungsfälle eines Moduls 13 dar, wobei das Modul kleiner oder noch größer sein kann. Auch eine Umkehrung der Luftströmung, d.h. von außen nach innen ist denkbar und für besondere Anwendungsfälle zweckmäßig.

## Patentansprüche

1. Vorrichtung zur Reinigung schadstoffbeladener Abluft durch heterogene Katalyse bestehend aus einem nichtmetallischen gasdurchlässigen und wickelbaren Trägerelement (1), das einzelne mit einer adsorptiv wirkenden Schicht eines Stoffes überzogene Fasern aufweist und das sandwichartig mit einem beheizbaren metallischen Gewebeband (2) verbunden ist und das ein Katalysatormaterial aufweisende Gesamtelement in einem Gehäuse angeordnet ist, das mit einem Einlaß und einem Auslaß versehen ist, durch die das mit Schadstoffen befrachtete Gas zuführbar und das gereinigte Gas abführbar sind,
dadurch gekennzeichnet,
daß das Trägerelement für die Beschichtungssubstanzen ein aus Glasgarn gestricktes Band (1) ist, wobei das Garn ein Filamentgarn einzelner Glasfasern ist, das mit einer Appretur überzogen ist und das zusammen mit dem die gleiche Breite aufweisenden metallischen Gewebeband (2), das mit einer Spannungsquelle verbunden ist, hochkantstehend spiralförmig gewickelt zu einer ein Mittenloch (3) aufweisenden Scheibe (6) ausgebildet ist und diese Scheibe (6) mit einem an sich bekannten zeolithischen Molekularsieb in Pulverform beschichtet ist und in dieser adsorptiv wirkenden Schicht mittels des an sich bekannten Sol-Gel-Verfahrens Katalysatormaterial vorzugsweise Platin implantiert ist und die Scheibe (6) in einem zylindrisch ausgebildeten Gehäuse angeordnet ist und das Gehäuse einen perforierten Innen- (9) und Außenmantel (8) aufweist und die Stirnseiten mit einem die Scheibe (6) verschließenden und den Innen- (9) und Außenmantel (8) umgreifenden Deckel (10, 11) versehen sind, wovon ein Deckel (10) das Mittenloch (3) abdeckt.

2. Vorrichtung nach Anspruch 1,
dadurch gekennzeichnet,
daß das Gestrick (1) eine Rechts/Rechts-Bindung aufweist.

3. Vorrichtung nach den Ansprüchen 1 und 2,
dadurch gekennzeichnet,
daß der verwendetet Zeolith hydrophil und / oder hydrophob ist.

4. Vorrichtung nach den Ansprüchen 1 - 3,
dadurch gekennzeichnet,
daß das metallische Gewebeband (2) an den Enden mit elektrischen Anschlüssen (4, 5) in Form von Laschen versehen ist, die mit der Spannungsquelle verbunden sind.

5. Vorrichtung nach einem der vorhergehenden Ansprüche 1 - 4,
dadurch gekennzeichnet,
daß mindestens zwei vorzugsweise bis zu sechs Scheiben (6.1 - 6.6) durch jeweils eine Glimmerscheibe (7) getrennt aufeinanderliegend im Gehäuse angeordnet sind und die außenliegenden Scheiben (6.1 - 6.6) durch die die Stirnseiten des Gehäuses verschließende Deckel (10, 11) abgedeckt sind.

6. Vorrichtung nach Anspruch 5,
dadurch gekennzeichnet,
daß immer zwei Scheiben (6.1 + 6.2, 6.3 + 6.4, 6.5 + 6.6) elektrisch in Reihe geschaltet und mit je einer Phase eines Drehstromnetzes verbunden und im Stern geschaltet sind.

7. Vorrichtung nach Anspruch 5,
dadurch gekennzeichnet,
daß der das Mittenloch (6) abdeckende Deckel (10) eine mittig angeordnete Öffnung (12) aufweist, durch die eine das Modul (13) auf einer Halterung befestigende Stange hindurchsteckbar ist.

## Claims

1. A device for cleaning exhaust air which is laden with harmful substances by means of heterogeneous catalysis, consisting of a non-metallic gas-permeable carrier element (1) which is able to be coiled and which has individual fibres coated with an adsorptively acting layer of a substance and which is connected in the manner of a sandwich with a heatable metallic fabric band (2) and the overall element, having a catalyst material, is arranged in a housing which is provided with an inlet and an outlet, through which the gas, loaded with harmful substances, is able to be supplied and the purified gas is able to be carried off,
characterised in that
the carrier element for the coating substances is a band (1) knitted from glass yarn, the yarn being a filament yarn of individual glass fibres, which is coated with a finish and which together with the metallic fabric band (2), which has the same width and which is connected to a voltage source, wound standing upright in a spiral shape is constructed into a disc (6) having a central hole (3) and this disc (6) is coated with a zeolithic molecular screen, known per se, in powder form and in this adsorptively acting layer, catalyst material, preferably platinum, is implanted by means of the sol-gel method known per se and the disc (6) is arranged in a cylindrically constructed housing and the housing has a perforated inner casing (9) and outer casing (8) and the front faces are provided with a cover (10, 11) closing the disc (6) and embracing the inner (9) and outer casings (8), of which a cover (10) covers the central hole (3).

2. The device according to Claim 1,
characterised in that
the knitted material (1) has a right/right cross-weaving.

3. The device according to Claims 1 and 2,
characterised in that
the zeolith which is used is hydrophilic and/or hydrophobic.

4. The device according to Claims 1-3,
characterised in that
the metallic fabric band (2) is provided at the ends with electrical connections (4, 5) in the form of tongues which are connected with the voltage source.

5. The device according to one of the preceding Claims 1-4,
characterised in that
at least two, preferably up to six discs (6.1-6.6) are arranged lying one on the other in the housing, separated in each case by a mica washer (7), and the discs (6.1-6.6) lying on the exterior are covered by the covers (10, 11) closing the front faces of the housing.

6. The device according to Claim 5,
characterised in that
always two discs (6.1 + 6.2, 6.3 + 6.4, 6.5 + 6.6) are connected electrically in series and are connected in each case with a phase of a three-phase mains and star-connected.

7. The device according to Claim 5,
characterised in that
the cover (10) covering the central hole (6) has a centrally arranged opening (12) through which a rod is able to be inserted securing the module (13) on a mounting.

## Revendications

1. Dispositif pour purifier de l'air d'échappement chargé de substances nocives par catalyse hétérogène, constitué d'un élément de support (1) non métallique, perméable au gaz et enroulable, qui présente des fibres individuelles revêtues d'une couche, agissant par adsorption, d'une matière et qui est relié en sandwich à une bande de tissu métallique (2) pouvant être chauffée, et l'élément dans son ensemble, présentant une matière de catalyseur, est agencé dans un boîtier qui est muni d'une entrée et d'une sortie, à travers lesquelles le gaz chargé de matières novices peut être amené et le gaz purifié peut être évacué,
caractérisé en ce que l'élément de support pour les substances de revêtement est une bande (1) tricotée en fil de verre, le fil étant un fil continu de fibres de verre individuelles, qui est revêtu d'un apprêt et qui, en même temps que la bande de tissu métallique (2) présentant la même largeur, qui est reliée à une source de tension, est réalisé, en étant enroulé en forme de spirale de chant, en un disque (6) présentant un trou central (3), et ce disque (6) est revêtu d'un tamis moléculaire zéolithique, connu en soi, sous forme pulvérulente et, dans cette couche agissant par adsorption, la matière de catalyseur, de préférence du platine, est implantée au moyen du procédé sol-gel connu en soi, et le disque (6) est agencé dans un boîtier réalisé de façon cylindrique et le boîtier présente une enveloppe interne (9) et une enveloppe externe (8) perforées, et les faces frontales sont munies d'un couvercle (10,11) enfermant le disque (6) et enveloppant l'enveloppe interne (9) et l'enveloppe externe (8), un couvercle (10) recouvrant le trou central (3).

2. Dispositif selon la revendication 1,
caractérisé en ce que le tricotage (1) présente une côte 1+1.

3. Dispositif selon les revendications 1 et 2,
caractérisé en ce que la zéolithe utilisée est hydrophile ou hydrophobe.

4. Dispositif selon les revendications 1-3,
caractérisé en ce que la bande de tissu métallique (2) est munie, aux extrémités, de raccords électriques (4,5) sous forme d'attaches, qui sont reliés à la source de tension.

5. Dispositif selon une des revendications précédentes 1-4,
caractérisé en ce qu'au moins deux, de préférence jusqu'à six disques (6.1-6.6) sont agencés dans le boitier l'un au-dessus de l'autre de façon séparée, à chaque fois, par un disque de mica (7), et les disques externes (6.1-6.6) sont recouverts par les couvercles (10,11) fermant les faces frontales du boîtier.

6. Dispositif selon la revendication 5,
caractérise en ce que toujours deux disques (6.1 + 6.2, 6.3 + 6.4, 6.5 + 6.6) sont montés électriquement en série et sont reliés à une phase respective d'une alimentation à courant triphasé et sont montés en étoile.

7. Dispositif selon la revendication 5,
caractérisé en ce que le couvercle (10) recouvrant le trou central (3) présente une ouverture (12) agencée de façon centrale, à travers laquelle une tige fixant le module (13) sur un support peut être enfichée.
